Europäisches Patentamt

European Patent Office

Office européen des brevets

(19)

(11) Veröffentlichungsnummer: **0 193 495 B1**

(12) **EUROPÄISCHE PATENTSCHRIFT**

(45) Veröffentlichungstag der Patentschrift: **29.01.92**

(51) Int. Cl.⁵: **A01G 31/02**, A01G 27/00

(21) Anmeldenummer: **86810098.3**

(22) Anmeldetag: **26.02.86**

(54) **Wassertank zur Langzeitbewässerung, insbesondere von Hydrokulturen.**

(30) Priorität: **26.02.85 DE 3506764**
**26.02.85 DE 3506765**
**24.04.85 DE 3514733**

(43) Veröffentlichungstag der Anmeldung:
**03.09.86 Patentblatt 86/36**

(45) Bekanntmachung des Hinweises auf die
Patenterteilung:
**29.01.92 Patentblatt 92/05**

(84) Benannte Vertragsstaaten:
**AT CH DE FR GB IT LI NL SE**

(56) Entgegenhaltungen:
**CH-A- 504 832**   **DE-C- 122 349**
**DE-C- 322 809**   **DE-C- 384 156**
**DE-U- 7 636 407**   **FR-A- 1 517 928**
**FR-A- 2 044 003**   **FR-A- 2 396 502**
**US-A- 3 757 469**   **US-A- 4 117 631**

(73) Patentinhaber: **Block, Hubert K.**
**Othestrasse 67 Postfach 1150**
**W-5275 Bergneustadt(DE)**

(72) Erfinder: **Block, Hubert**
**Othestrasse 67**
**W-5275 Bergneustadt(DE)**
Erfinder: **Baumann, Gerhard**
**Ouellenrain 32**
**CH-3063 Ittigen(CH)**

(74) Vertreter: **Lüthy, Thomas et al**
**FELBER & PARTNER AG Dufourstrasse 116**
**CH-8008 Zürich(CH)**

EP 0 193 495 B1

## Beschreibung

Die vorliegende Erfindung betrifft einen Wassertank zur Langzeitbewässerung von Topfpflanzen, insbesondere von Hydrokulturen. Besonders Hydrokulturen bedürfen eines stetig ungefähr gleichbleibenden Wasserstandes in dem Gefäß, in dem sie eingebettet sind. Bei kleineren Pflanzgefäßen wird dies dadurch erreicht, daß in das Wasser des Gefäßes ein Wasserstandsanzeiger eingetaucht ist, welcher jederzeit erlaubt, den aktuellen Wasserstand abzulesen. Am Wasserstandsanzeiger ist durch eine Markierung ein maximaler und ein minimaler Wasserstand angegeben zwischen denen sich der Pegelstand im Pflanzgefäß bewegen soll, um das Gedeihen der Pflanze zu gewährleisten. Solche Pflanzgefäße müssen wegen der relaitv geringen Spanne zwischen dem minimal und dem maximal zulässigen Wasserstand fleißig überwacht werden um sicherzustellen, daß sich der Wasserstand im vorgeschriebenen Bereich bewegt. Wird das Nachfüllen versäumt oder wird über den vorgeschriebenen Wasserstand hinaus Wasser nachgefüllt, droht die Pflanze Schaden zu nehmen oder gar abzusterben. Um den Wasserpegel selbsttätig annähernd konstant zu halten und gleichzeitig die Nachfüllintervalle zu vergrößern, werden solche Pflanzgefäße mit Wassertanks ausgerüstet. Diese Wassertanks bestehen aus Hohlkörpern mit einem Ausflußloch in Bodennähe. Zur Anwendung werden diese Wassertanks neben dem Wurzelwerk der Pflanzen in das Pflanzgefäß gestellt. Weil sie oben luftdicht abgeschlossen sind, läuft nur so lange Wasser aus dem Ausflußloch, bis keine Luft mehr von außen durch dieses in den Tank gelangt. Dies ist dann der Fall, wenn der Wasserstand im Pflanzgefäß die obere Begrenzung des Ausflußloches erreicht. Über der Wasseroberfläche im Tank bildet sich ein Unterdruck im Vergleich zum Luftdruck außerhalb des Tanks, weswegen diese Tanks als nach dem Unterdruckprinzip arbeitend bezeichnet werden. Verbraucht die Pflanze durch Assimilation Wasser aus dem Pflanzgefäß, so sinkt der dortige Wasserstand ab, bis zwischen ihm und der oberen Begrenzung des Ausflußloches des Wassertanks Luft in den Tank eindringen kann. Diese erhöht sodann den im Tank herrschenden Luftdruck, wonach solange Wasser aus dem Ausflußloch fließt, bis die Flüssigkeitsdrucke im Bereich des Ausflußlochs innerhalb und außerhalb des Tanks wieder übereinstimmen. So praktisch ein solcher Unterdrucktank auf den ersten Blick erscheint, so viele Probleme ergeben sich bei seinem Betrieb und seiner Fertigung in der Praxis: Das einwandfreie Funktionieren des Unterdruckprinzips erfordert einen oben absolut luftdichten Hohlkörper. Da nun der Tank auch nachfüllbar sein muß, ist dieses Erfordernis gar nicht so leicht zu erfüllen. Zum Beispiel können die zum Verschließen der oben angeordneten Einfüllöffnung verwendeten Stopfen mit der Zeit infolge von atmosphärischen Einwirkungen wie Sonneneinstrahlung, Temperatur- und Feuchtigkeitsschwankungen undicht werden. Werden Schrauben- oder Klemmverschlüsse verwendet, so bergen diese die Gefahr von Fehlmanipulationen. Tritt unbemerkt auch nur wenig Luft in einen Tank ein, so können durch den angestiegenen Wasserstand im Pflanzgefäß die Pflanzen, die oft recht teuer in der Anschaffung sind, zerstört werden. Übliche Tanks sind oben mit einer solchen dicht verschließbaren Einfüllöffnung versehen. Das Auffüllen soll rasch erfolgen, um den Wasserauslauf durch das relativ kleine Ausflußloch während dem Auffüllen gering zu halten.

Da verschiedene Größen von Pflanzgefäßen angeboten werden, müssen die Tanks in ihrem Fassungsvermögen sehr unterschiedlich dimensioniert werden, um für jedes Pflanzgefäß eine optimale Wasserversorgung über längere Zeitintervalle hinweg sicherstellen zu können. Diese Tatsache wirkt sich in ansehnlichen Kosten aus, müssen doch für jede Tankgröße spezielle Fertigungswerkzeuge beschafft werden.

Wenngleich die bekannten Unterdrucktanks größere Gießintervalle erlauben und den Wasserstand in einem Pflanzgefäß in einem gewünschten Bereich regulieren, so lassen sie den Verwender dennoch im unklaren, wann ein Nachfüllen erforderlich ist. Da ein Wasserstandsanzeiger bisher fehlt, ist der Verwender stets mehr oder weniger im ungewissen darüber, wieviel Wasser noch im Tank zur Verfügung steht. Wenn das Nachfüllen eines Tanks immer von der gleichen Person besorgt wird, so wird diese aus Erfahrung ungefähr wissen, nach welcher Zeit ein Nachfüllen notwendig wird. Die Tatsache aber, daß dies nicht mit einem Blick festgestellt werden kann, zwingt den Verwender im Zweifelsfalle zum nachschauen, indem er den Einfüllstutzen öffnen und eine Sichtkontrolle durchführen muß. Das Öffnen und Schließen der Einfüllöffnung in diesem Zusammenhang birgt die zusätzliche, eingangs geschilderte Gefahr einer Fehlmanipulation. Wird die Einfüllöffnung nicht einwandfrei verschlossen, so hat dies für die Pflanze unter Umständen verheerende Folgen. Besonders bei Verwendung von Unterdrucktanks in Verwaltungen, Betrieben und Haushalten, wo gegebenenfalls verschiedene Personen abwechslungsweise die Pflanzen versorgen, ist das Fehlen eines Wasserstandsanzeigers ein augenfälliger Mangel.

In diesem Zusammenhang werden auch folgende zwei Druckschriften genannt:
1) DE - C - 122 349 (TIMM);
2) DE - C - 384 156 (ALTMANN & CO).

Sie betreffen Vorschläge für die Langzeitbewässerung von Erdkulturen; ihre Reservoire sind allerdings über der Erde angeordnet, und in den Boden einsteckbare "Spitzen" lassen das Wasser zu den Pflanzenwurzeln gelangen. In weiterer Gemeinsamkeit sind bei ihnen z.B. je zwei Reservoire bildende Gefäße mit je einem zentral angeordneten - stark taillenartig wirkenden - Schlauch verbunden; und je die Wasserzuführung wird von einem Reservoir-Gefäß aus vorgenommen, von dem es zum Nächsten durchläuft. So praktisch diese 'gestaffelten' "Tankbatterien" - auf den ersten Blick gesehen - zu sein scheinen, so funktionsunsicher erweisen sie sich in der Praxis. Denn ohne Entlüftungseinrichtungen der geschlossenen Reservoir-Behälter füllen sich diese nicht, oder zumindest nicht voll auf. Nun, die vorgenannt unter "2" bezeichnete Druckschrift zeigt auch keinen Unterdruckprinziptank, weshalb die dortige Konstruktion auch nicht für die selbstregelnde Wasserversorgung z.B. von Hydrokulturen geeignet ist. Der transparente Unterdrucktank aus der ersten Schrift birgt in sich insgesamt die Nachteile, daß

a) die Tankelemente sich nicht (wie genannt) voll auffüllen;

b) eine problemlösende Entlüftung der nachfolgenden Tankteile nicht vorgesehen und möglich ist, weil dort die 'Luftausdehnungs-Technik' (betrifft: heiße Tage) für größere Wassergaben angestrebt wird;

c) die Tankteile leicht veralgen - wegen dem ungehinderten Lichteinfall - (das macht sie unansehlich und entzieht dem Wasser ein Teil des für die Pflanzen notwendigen Sauerstoffs);

d) die "Stopfen-Lös-Technik" der Erfindung für eine kontinu = ierlichere 'Wasserdosierung' der Unterdruckprinzip-Technik diametral entgegenläuft (es geht nur das 'Eine', oder nur das 'Andere');

e) wegen der Punkte "a", "b" und z.T. "d" selbiger für die "Unter-Granulat-Verwendung" ungeeignet ist.

Die Erfindungsaufgabe für die Erstellung eines Langzeitbe = wässerungs-Tanks besteht darin, daß er nachfülltechnisch vornehmlich manipulationssicher und werkzeugkostenmäßig gün = stig ist; zudem daß er betreffs Funktion und Inhaltsangabe kontrollierbar ist, sowie daß er
fur die "Unter-Granulat-Verwendung" - vornehmlich also für Hydrokulturen - geeignet ist .

Die vorliegende Erfindung löst die gestellte Aufgabe, indem sie einen Wassertank zur Langzeitbewässerung insbesondere von Hydrokulturen schafft, der aus einem luftdichten, in ein Pflanzbehältnis einstellbaren - respektive einsteckbaren - Behälter mit einer Einfüllöffnung und einer im Basisbereich des Wassertanks angeordneten Ausflussöffnung besteht, - also der damit nach dem Unterdruckprinzip den Wasserstand im Pflanz = gefäß selbsttätig reguliert - , und der bei einer Variante mit Untergliederungen in mindestens zwei formbeständige, gegen = einander bewegbare Teilbehälter aufgruppiert ist, in Kenn = zeichnung a) durch einen doppelwandigen, filmscharnierartigen Bereich; oder b) durch einen Falten aufweisenden - balgartigen - Bereich; oder c) durch zumindest mittels einer unteren - bodenseitigen, flexiblen - Wassernachlauf-Verbindung und oben - deckelseitig - angeordneten, flexiblen Luftaus = tausch-Verbindung; sowie daß die Teilbehälter je miteinander kommunizierend ausgestaltet sind; und daß der Unterdruckprin = zip-Tank mit einem Wasserstandsanzeiger bestückt ist.

In den Figuren werden einige Ausführungsbeispiele des er = findungsgemäßen Wassertanks dargestellt.

Es zeigt:

Figur 1:     einen Gliedertank,
Figur 2:     einen Gliedertank, eingesetzt in ein rundes Pflanz = gefäß,
Figur 3:     einen Wassertank aus Tankelementen in einem aufge = schnittenen Pflanzgefäß,
Figur 4:     den Wassertank aus Figur 3 in Einfüllage,
Figur 5:     einen flexiblen Ringtank;
Figur 6:     einen Faltentank im Grundriß in einem linsenförmigen Pflanzgefäß,
Figur 7:     einen Faltentank in Einfüllage im Aufriß in einem aufgeschnittenen Pflanzgefäß,
Figur 8:     einen Unterdrucktank mit Sichtrohr-Wasserstandsanzeiger in zwei Ausführungen a und b.

Nachfolgend werden die in den Figuren dargestellten Ausführungsbeispiele im einzelnen erläutert und deren Vorteilhaftigkeiten aufgezeigt.

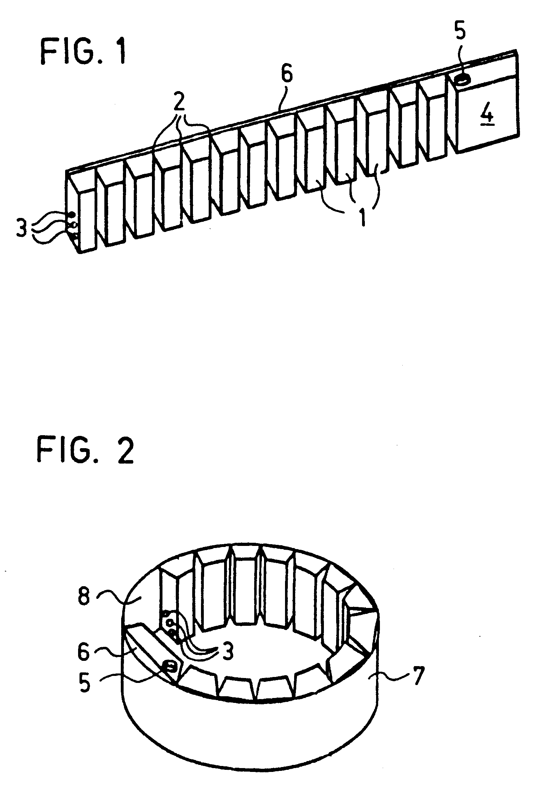

Figur 1 zeigt einen sogenannten Gliedertank. Dieser besteht hier aus einem Behälter mit mehreren formbeständigen Teilen 1, welche bei der gezeigten Ausführungsform einen trapezförmigen Querschnitt aufweisen. Diese einzelnen Behälterteile 1 sind miteinander einstückig über doppelwandige Stellen 2, welche je einen filmscharnierartigen Bereich bilden, verbunden.

Je zwei formbeständige Teile 1 sind um den sie verbindenden filmscharnierartigen Bereich relativ gegeneinander bewegbar, indem sie sich um die durch die besagten Bereiche gebildeten Achsen gegeneinander schwenken lassen. Ein oder mehrere Behälterteile 1 können mit Ausflußlöchern 3 versehen sein. Damit mehrere unterschiedliche Wasserniveaus im Pflanzgefäß regelbar sind, können die Ausflußlöcher 3 in verschiedenen Höhen angebracht sein und nach Belieben einzeln verschlossen werden. Ein formbeständiger Behälterteil 4 des Gliedertankes kann größere aufweisen, um die Einfüllöffnung 5 und gegebenenfalls einen Wasserstandsanzeiger aufzunehmen, der später genauer beschrieben wird, hier aber nicht dargestellt ist. Die hier gezeigte Ausführungsform zeichnet sich durch eine glatte Fläche auf der hinteren Seite 6 des Gliedertanks aus, welche sich an die Innenwand eines Pflanzengefäßes anschmiegen läßt.

Der solchermaßen in ein Pflanzgefäß eingepaßte Tank ist in Figur 2 dargestellt. Hier ist das Pflanzgefäß 7 ein Rundgefäß und der Gliedertank ist mit seiner glatten Seite 6 an die Innenwand 8 dieses Rundgefäßes 7 angeschmiegt. Die Lage der Einfüllöffnung 5 und der Ausflußöffnungen 3 sind erkennbar. Durch die Flexibilität des Gliedertanks läßt sich dieser in verschiedene runde und eckige Formen von kleinen bis großen Pflanzgefäßen einlegen. Wenn er an den Innenrand angelegt ist, nimmt er relativ wenig Platz ein und behindert nicht das Einpflanzen und Zusammenstellen einer Pflanzengruppe.

Darüber hinaus kann dieser Gliedertank in einem Pflanz-Großgefäß auch durchquerend eingesetzt weden, ob gerade oder gekrümmt, wie es gerade erforderlich oder wünschbar erscheint.

Der Gliedertank als erfindungsgemäße Ausführungsform bringt wesentliche Vorteile gegenüber den bisher üblichen Wassertanks. Es kann ein und derselbe Gliedertank in vielen verschiedenartigen Pflanzgefäßen verwendet werden und es braucht daher nicht für jedes Gefäß einen speziellen Tank. Neben dieser universalen Verwendungsmöglichkeit kann er beliebig um die Wurzelwerke von eingesetzten Pflanzen herumgeführt sein. Zudem können mehrere erfindungsgemäße Gliedertanks auch platzsparend gelagert werden, denn in ausgebreiteter Form sind sie stapelbar.

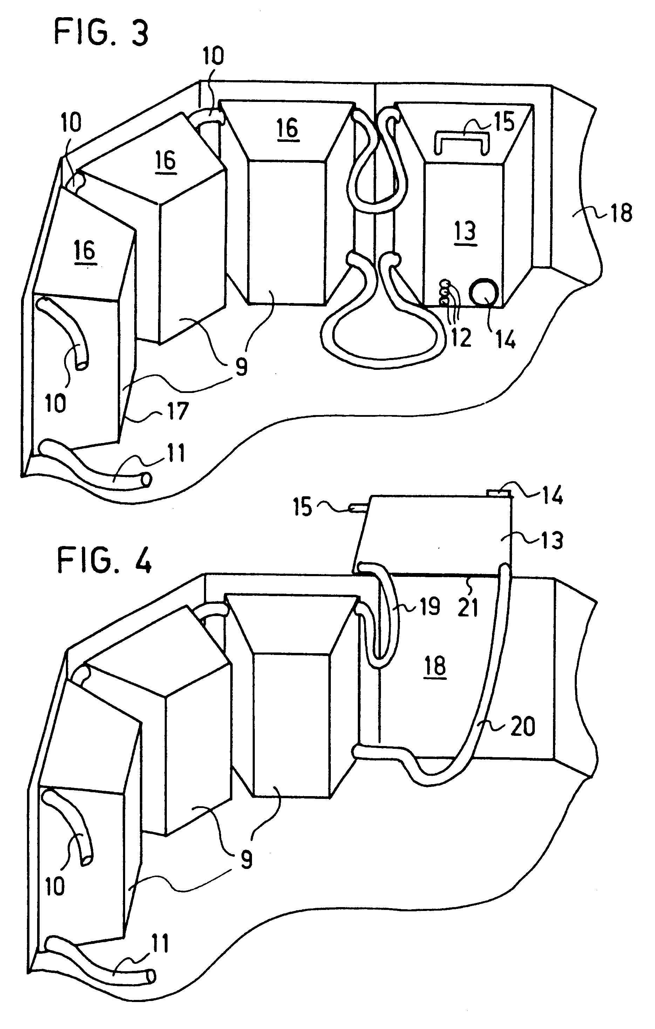

Figur 3 zeigt eine besonders vielfältig verwendbare Ausführung des Erfindungsgegenstandes, indem der Wassertank aus mehreren Tankelementen 9 besteht, die hier in einem aufgeschnittenen Pflanzgefäß 18 dargestellt sind. Die einzelnen Tankelemente 9 sind dabei mit je zwei flexiblen Schläuchen 10, 11 verbunden. Diese Schläuche 10, 11 sind mit Vorteil lösbar mit den Tankelementen 9 verbunden. Der obere Schlauch 10 ist nahe der oder an der Behälterdeckfläche 16 der Tankelemente 9 angeschlossen und sorgt für den Luftaustausch unter den zusammengehängten Tankelementen 9. Der untere Schlauch 11 ist hingegen nahe dem oder am Behälterboden 17 angeschlossen, um den Wassernachlauf in dasjenige Tankelement 13 sicherzustellen, welches mit einer Ausflußöffnung 12 versehen ist. Eine solche Ausflußöffnung 12 kann jedoch auch in mehreren Tankelementen vorhanden sein und die Ausflußöffnungen 12 können in verschiedenen Höhen angebracht sein, um wiederum durch Verschließen von entsprechenden Ausflußöffnungen den gewünschten Wasserstand im Pflanzgefäß 18 einzustellen. Das Einfüllen kann bei einem einzelnen Tankelement durch eine spezielle, oben angeordnete, dicht verschließbare Einfüllöffnung erfolgen. Eine andere, unter Umständen vorteilhaftere und hier gezeigte Möglichkeit besteht darin, die Einfüllöffnung 14 in Bodennähe anzuordnen. Durch die flexible Verbindung mit dem benachbarten Tankelement ist nämlich die Möglichkeit gegeben, das Tankelement 13 mit der Einfüllöffnung 14 zum Nachfüllen mit Hilfe des Griffes 15 aus dem Pflanzgefäß herauszuheben und so umzudrehen, daß die untenliegende Einfüllöffnung 14 oben zu liegen kommt. In dieser Lage kann bequem nachgefüllt werden. Wenn das besagte Tankelement 13 zudem das einzige ist, das mit einer Ausflußöffnung 12 versehen ist, so besteht während des Nachfüllens keine Gefahr, daß infolge der Luftzufuhrmöglichkeit Wasser in das Pflanzgefäß 18 ausläuft.

Dies ist in Figur 4 veranschaulicht. Sie zeigt das Tankelement 13 mit Einfüllöffnung 14 nahe dem Behälterboden in Nachfüllage. Wichtig ist, daß die beiden Verbindungsschläuche 19, 20 zu diesem Tankelement 13 mit Einfüllöffnung 14 genügend lang und flexibel sind, damit das Tankelement 13 genügend hoch angehoben werden kann. Vorteilhaft ist es zum Anheben mit einem Griff 15 versehen und seine Rückseite 21 ist so beschaffen, daß es auf eine Unterlagefläche abstellbar ist, damit das Nachfüllen einfach vonstatten geht.

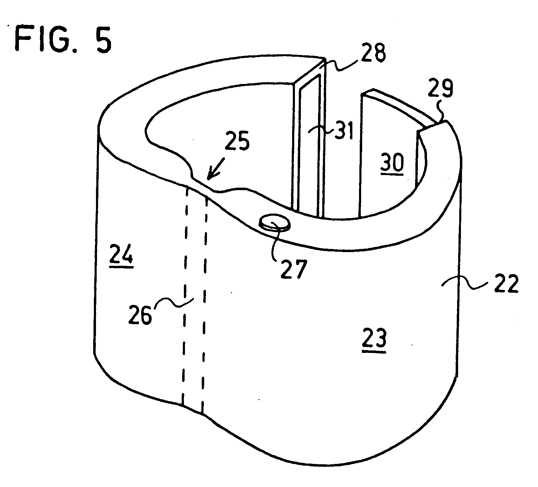

Die in Figur 5 gezeigte Ausführung zeigt einen flexiblen Ringtank 22. Dieser Tanktyp hat den Vorteil, daß er in eine ganze Reihe von Rundgefäßen einpaßbar ist, welche ja sehr verbreitet sind. Seine Teilbehälter bilden bei der vorliegenden Ausführung Hohlzylindersegmente mit einem Außenradius, welcher dem des kleinsten Rundgefäßes entspricht, in das der Ringtank einpaßbar sein soll. Der gezeigte Ringtank 22 besteht aus zwei formbeständigen Teilbehältern 23, 24, die an der Stelle 25 über einen doppelwandigen, filmscharnierartigen Bereich 26 schwenkbar miteinander verbunden sind. Die Einfüllöffnung 27 ist hier in einem der Teilbehälter angeordnet. Es sind Ausführungen möglich, bei denen die Einfüllöffnung unten angebracht ist wie auch solche, bei denen sie oben sitzt, nur muß sie dann luftdicht verschließbar sein. Bei Ringtanks mit Einfüllöffnung unten muß dieser zum Nachfüllen gänzlich aus dem Pflanzgefäß herausgenommen werden können. Die Ausflußöffnung befindet sich unten und kann in einem oder mehreren Teilbehältern und in verschiedenen Höhen angeordnet sein, um durch Verschließen bestimmter Ausflußöffnungen einen gewünschten Wasserstand einstellbar zu machen. Zum Einpassen in runde Pflanzgefäße verschiedener Größe lassen sich die Hohlzylindersegmente um die Stelle 25 gegeneinander auf- und zuschwenken. Damit der Ringtank 22 stets einen geschlossenen Ring bildet und kein Granulat zwischen den Endseiten 28, 29 der zueinander schwenkbaren Teilbehälter 23, 24 gelangen kann, bilden diese einen Überlappungsbereich, indem die eine Endseite 29 einen hohlen und flexiblen Fortsatz 30 aufweist, welcher in eine im Querschnitt dazu passende ausgenommene Vertiefung 31 in der Endseite 28 des gegenüberliegenden Teilbehälters 24 paßt. Der Überlappungsbereich kann auch durch eine laschenförmige Weiterführung der Innenwand des einen Teilbehälters gebildet sein. Selbstverständlich kann ein erfindungsgemäßer Ringtank auch aus drei oder noch mehr Hohlzylindersegmenten bestehen.

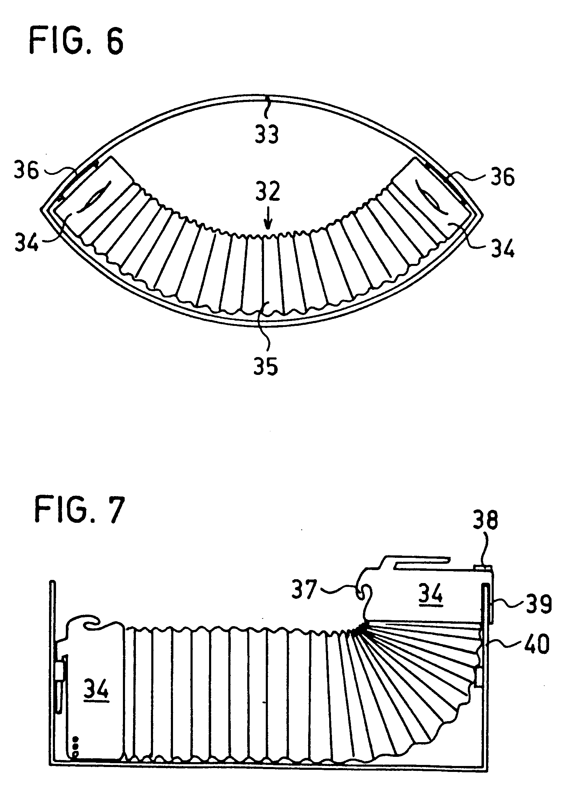

Besonders für eckige wie quadratische, rechteckige oder mehreckige Pflanzgefäße eignet sich der erfindungsgemäße Faltentank 32, von dem eine Ausführungsform in Figur 6 im Grundriß, in einem linsenförmigen Pflanzgefäß 33 liegend, gezeigt ist. Dieser Faltentank 32 besteht im wesentlichen aus zwei formbeständigen Behälterteilen 34, die mittels einem Faltenbalg 35 zueinander bewegbar sind. Der Faltentank 32 ist dadurch um einen bestimmten Bereich zusammenschieb- und auseinanderziehbar, ähnlich dem Faltenbalg eines Akkordeons. Der Faltenbalg 35 kann jedoch nicht nur in einer Richtung auseinandergezogen werden, sondern erlaubt auch Schwenkungen in jede Richtung. Der hier gezeigte Faltentank 32 weist einen rechteckigen Querschnitt auf. Damit er nach dem Unterdruckprinzip funktionieren kann, muß der Faltenbalg 35 von einer Steifigkeit sein, welche gewährleistet, daß er bei fortschreitender Entleerung infolge des herrschenden Unterdruckes in seinem Innern nicht vom Atmosphärendruck zusammengedrückt wird und dadurch soviel Wasser ausläuft, daß es im Pflanzgefäß das Niveau der Ausflußöffnung übersteigt. Aus demselben Grund sind Befestigungsmittel 36 notwendig, mittels denen die formbeständigen Behälterteile 34 am Pflanzgefäß 33 lösbar befestigt werden können. Bei Entleerung kann sich der Faltenbalg 35 deshalb nicht zusammenziehen. Neben der Einpaßbarkeit in verschiedenste Pflanzgefäße bietet der Faltentank, auch in Bezug auf die Nachfüllprozedur, einen wesentlichen Vorteil. Weil seine formbeständigen Behälterteile 34 beweglich sind, kann neben der Ausflußöffnung auch die Einfüllöffnung in Bodennähe eines solchen Behälterteils 34 angeordnet sein. Dadurch muß die Einfüllöffnung nicht mehr notwendigerweise luftdicht verschließbar sein und die Gefahr von unbeabsichtigtem Auslaufen von Wasser ist damit gebannt.

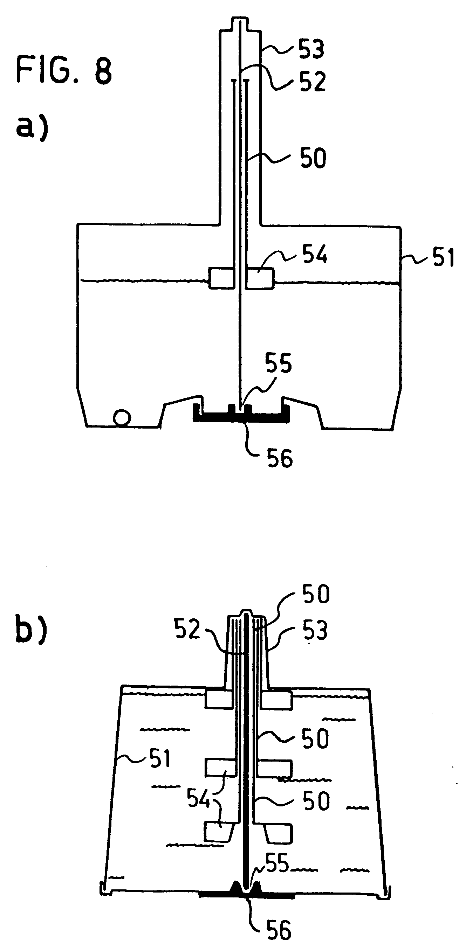

Wie in Figur 7 im Aufriß durch ein Pflanzgefäß 40 geschnitten dargestellt, wird zum Nachfüllen von Wasser der Behälterteil 34 mit der Einfüllöffnung 38 mittels des Griffes 37 so aus dem Pflanzgefäß 40 angehoben, daß die Einfüllöffnung 38 zuoberst zu liegen kommt. Diese Lage kann durch Befestigungsmittel 39 gehalten werden, welche es ermöglichen, den besagten Behälterteil 34 am Pflanzgefäßrand 40 aufzustecken.

Bei formlicher Eignung können die Teilbehälter oder Behälterteile jedes erfindungsgemäßen Wassertanks mit einem herausnehmbaren Boden versehen sein, der in die Hohlkörper einrastbar gestaltet ist. Sind die Hohlkörper zusätzlich gegen oben konisch ausgebildet, so lassen sich die Tanks ohne Bodenteil aufeinanderstapeln.

Figur 8a und b zeigen Wasserstandsanzeiger für die erfindungsgemäßen Wassertanks. Die Ablesung erfolgt am bzw. an den Anzeigern 50, die durch ein den Behälter 51 überragendes Sichtrohr 53 einsehbar sind. In diesem oben geschlossenen Sichtrohr 53 ist ein Führungsstab 52 gehalten, längs dem die Anzeiger 50 geführt sind, welche an ihrem unteren Ende je mit einem Schwimmer 54 verbunden sind. Der Führungsstab 52 ist an seinem unteren Ende durch eine spezielle Vertiefung 55 im Verschlußdeckel 56 gehalten. Der Verschlußdeckel 56 im Behälterboden verschließt die Öffnung, die so groß gehalten ist, daß der ganze Wasserstandsanzeiger durch sie herausnehm- und wieder einsetzbar ist. Im Sinne der Ausführung nach Figur 3 und 4 können auch andere Tankelemente mittels trennbarer Verbindungen in beliebiger Anzahl und Länge verbunden werden. So können Gliedertanks gemäß Figur 1 und 2 verschiedener Länge vorgesehen sein, die in beliebiger Kombination zu Gliedertanks bestimmter totaler Länge verbunden werden können. Es kann hierbei ein Grundmodell mit dem Behälterteil 4 vorgesehen sein, das für kleinere Gefäße bemessen ist und dem weitere Gliedertanks ohne Behälterteil 4 angeschlossen werden können, wenn für größere Gefäße längere Tanks erforderlich sind.

Anstelle des besonderen Füllelementes 13 gemäß Figur 3 und 4, können in entsprechender Weise an weitere Tankelemente anschließbare Füllelemente anderer Form und insbesondere anderer Funktion vorgesehen sein.

**Patentansprüche**

1.  Wassertank zur Langzeitbewässerung insbesondere von Hydro = kultur-Pflanzen , bestehend aus einem luftdichten, in ein Pflanzbehältnis einstellbaren - respektive einsteckbaren - Behälter mit einer Einfüllöffnung und einer im Basisbereich des Wassertanks angeordneten Ausflussöffnung , - also der da = mit nach dem Unterdruckprinzip den Wasserstand im Pflanzgefäß selbsttätig reguliert - , und der bei einer Variante mit Untergliederungen in mindestens zwei formbeständige, gegenein = ander bewegbare Teilbehälter aufgruppiert ist,

**gekennzeichnet**

a) durch einen doppelwandigen, filmscharnierartigen Bereich (2; 26), oder b) durch einen Falten aufweisenden - balgartigen - Bereich (32,35), oder c) durch zumindest mittels einer unte = ren - bodenseitigen (17), flexiblen - Wassernachlauf-Ver = bindung (11) und oben - deckelseitig (16) - angeordneten, flexiblen Luftaustausch-Verbindung (10 , sowie daß die Teil = behälter (1,4; 9; 23,24; 34,35) je miteinander kommunizierend ausgestaltet sind , und daß der Unterdruckprinzip-Tank mit einem Wasserstandsanzeiger bestückt ist .

2. Wassertank nach dem Anspruch 1, **dadurch gekenn = zeichnet,** daß die Teilbehälter (23,24) zusammen einen Durchmesser variablen, annähernd ringförmigen Tank formen .

3. Wassertank nach dem Anspruch 2, **dadurch gekenn = zeichnet,** daß die zwei Teilbehälterenden (28,29) je mit einem ringschließenden Überlappungsteil (28) ausgebildet sind.

4. Wassertank nach dem Anspruch 1, **dadurch gekenn = zeichnet,** daß die Einfüllöffnung (14,38) nahe dem oder im Boden (17) eines Teilbehälters (13,34) angeordnet ist.

5. Wassertank nach dem Anspruch 1, **dadurch gekenn = zeichnet,** daß er (1; 23,24; 51) - respektive je ein Teilbehälter (9,34) - gegen oben konisch geformt ist und einen herausnehmbaren Boden (56) aufweist, welcher an dem Be = hälter (1: 23,24; 51) - respektive Teilbehälter (9; 34) - einrastbar angeordnet ist .

6. Wassertank nach den Ansprüchen 1 und 2, **dadurch ge = kennzeichnet,** daß flexible Bereiche (2,26; 10,11; 32,35) und Teilbehälter (1,4; 9,13; 23,24; 34,35) unterschied = licher Form - sowie Füllelemente (4/5; 13/4; 27; 34/38) un = terschiedlicher Form und Funktion bei ihm vorgesehen sind .

7. Wassertank nach den Ansprüchen 1-6, **dadurch ge = kennzeichnet**, daß er etwa parallel im Randbereich eines Großgefäßes (7,8; 18; 33) angeordnet ist - respekti = ve dieses durchquerend - , oder in Variation auch um einzelne Pflanzen herumgeführt im Behältnis (7,8) einsteht.

8. Wassertank nach dem Anspruch 1, **dadurch gekenn = zeichnet,** daß bei dem Anzeiger ein geschlossenes Sichtrohr (53) vorgesehen ist .

9. Wassertank nach dem Anspruch 8, **dadurch gekenn = zeichnet,** daß im Behälterboden gegenüber dem Sichtrohr (53) eine verschließbare Öffnung (56)-vornehmlich mit einer Stabführungs-Vertiefung (55)-angebracht ist.

10. Wassertank nach den Anspüchen 8 und 9, **dadurch ge = kennzeichnet,** daß zwischen dem Sichtrohr (53) und der verschließbaren Öffnung (56) ein Führungs-Stab (52) einge = bracht ist, und daß ein oder mehrere auf dem Führungsstab (52) geführte Schwimmer (54) mit Anzeiger (50) vorgesehen sind.

**Claims**

1. Water tank for long-term water-supply especially for hydroculture plants , consisting of an airtight container that can be put respectively plugged into a plant vessel with a refill opening and with an outlet opening arranged in the area of the basis , - that so is working according to the principle of the sub-atmosperic pressure and thus is regulating the water level in the plant vessel automatically - , and that with one variant is grouped with under-articulations in at least two shape-retaining, against each other movable partial containers,

**distinguished by**

a) a double walled, film hinge-like area (2; 26), or b) by a folds displaying - like a bellows - area (32, 35) or c) by at least by means of a lower - arranged near the bottom (17), flexible - water-refill automatic-connection (11) and an upper - arranged near the lid (16) - flexible air-exchange connection (10) , as well that the partial containers (1, 4; 9; 23, 24; 34, 35) are made to communicate with each other , and that the sub-atmospheric pressure tank is provided with a water-level indicator.

2. Water tank according to claim 1, **distinguished in that** the partial containers (23, 24) together form a diameter-variable, approximately circular tank.

3. Water tank according to claim 2, **distinguished in that** the two partial container ends (28, 29) are each designed with a circular tightening overlapping part (28).

4. Water tank according to claim 1, **distinguished in that** the refill opening (14, 38) is arranged close to or in the bottom (17) of a partial container (13, 34).

5. Water tank according to claim 1, **distinguished in that** it (1; 23, 24; 51) - respectively each a partial container (9, 34) - is formed conically towards the top and has a removable bottom (56), that is arranged to click into position to the container (1; 23, 24; 51) respectively partial container (9, 34).

6. Water tank according to claims 1 and 2, **distinguished in that** flexible areas (2, 26; 10, 11; 32, 35) and partial containers (1, 4; 9, 13; 23, 24; 34, 35) of varying designs - as well as fill-elements (4/5; 13/14; 27; 34/38) of varying designs and functions are intended with it.

7. Water tank according to claims 1 to 6, **distinguished in that** it is arranged about parallelly in the area of the rim of a large container (7, 8; 18; 33) - respectively crossing it - , or stands in variation also conducted around single plants in the container (7, 8).

8. Water tank according to claim 1, **distinguished in that** at the indicator a closed transparent pipe (53) is intended.

9. Water tank according to claim 8, **distinguished in that** in the bottom of the container, opposite the transparent pipe (53) is a closeable opening (56) especially with a guiding-rod indentation (55).

10. Water tank according to claims 8 and 9, **distinguished in that** between the transparent pipe (53) and the closeable opening (56) a guiding-rod (52) is put in, and that on the guiding-rod (52) one or more guided floats (54) with indicator (50) are intended.

**Revendications**

1. Citerne d'eau pour arrosage de longue durée en particulier pour les plantes hydrophoniques, composée d'un récipient hermétique avec une ouverture pour remplissage et avec un orifice d'écoulement aménagé dans le fond de la citerne, réglable et enfichable dans un récipient pour plantes, lequel réservoir régularise seul le niveau d'eau selon le principe de dépression, et qui, dans une variante subdivisée, est divisé au moins en deux réservoirs partiels, résistants à la déformation, qui sont opposés l'un à l'autre et mobiles,

   **caractérisée**

   a) par un domaine de double paroi à l'aspect d'une couche fine en forme de charnière (2;

26), ou b) par un domaine en forme de soufflet qui présente des plis (32, 35) ou bien c) par un raccord flexible de refoulement d'eau (11) en bas (17) et en haut (16) par un raccord flexible aménagé pour échange d'air (10) de telle sorte que les réservoirs partiels (1,4; 9; 23,24; 34,35) forment les uns avec les autres des vases communicants et que la citerne à principe de dépression est munie d'un indicateur de niveau d'eau.

2. Citerne d'eau selon la revendication 1, **caractérisée par le fait** que les réservoirs partiels (23,24) forment une citerne d'eau approximativement circulaire et d'un diamètre variable.

3. Citerne d'eau selon la revendication 2, **caractérisée par le fait** que les deux réservoirs partiels (28,29) sont équipés chacun avec une pièce à recouvrement circulaire (28).

4. Citerne d'eau selon la revendication 1, **caractérisée par le fait** que l'ouverture de remplissage (14,38) aménagée soit près du fond ou dans le fond (17) d'un réservoir partiel (13,34).

5. Citerne d'eau selon la revendication 1, **caractérisée par le fait** qu'elle (1; 23,24; 51) - respectivement un réservoir partiel (9, 34)- ait une forme conique vers le haut et qui présente un fond qui peut être ôté (56), lequel est aménagé de telle sorte qu'il est enclenchable dans le réservoir (1; 23,24; 51) -respectivement dans les réservoirs partiels (9;34).

6. Citerne d'eau selon les revendications 1 et 2, **caractérisée par le fait** que des zones flexibles (2, 26; 10,11; 32,35) et des réservoirs partiels (1,4; 9,13; 23,24; 34,35) de formes différentes - ainsi que des éléments de remplissage (4/5; 13/14; 27; 34/38) de formes et de fonctions différentes soient prévus en elle.

7. Citerne d'eau selon les revendications 1 à 6, **caractérisée par le fait** qu'elle soit placée à peu près parallèlement au bord d'un grand récipient (7, 8; 18; 33) - et traverse ce récipient - ou qu'elle entoure aussi, en variation, différentes plantes dans le récipient (7,8).

8. Citerne d'eau selon la revendication 1, **caractérisée par le fait** qu'um tube voyant (53) fermé soit prévu pour l'indicateur.

9. Citerne d'eau selon la revendication 8, **caractérisée par le fait** qu'une ouverture fermable (56) - surtout avec un creux pour guidage du bâton (55) - se trouve dans le fond du récipient en face du tube voyant (53).

10. Citerne d'eau selon les revendications 8 et 9, **caractérisée par le fait** qu'um bâton de guidage (52) soit introduit entre le tube voyant (53) et l'ouverture fermable (56) et qu'un ou plusieurs flotteurs (54) avec indicateur (50) soient prévus sur le bâton de guidage (52).

FIG. 1

FIG. 2

FIG. 3

FIG. 4

## FIG. 5

FIG. 6

FIG. 7

FIG. 8

a)

b)